(19) Europäisches Patentamt

European Patent Office

Office européen des brevets

(11) Veröffentlichungsnummer : **0 051 159 B1**

# (12) EUROPÄISCHE PATENTSCHRIFT

(45) Veröffentlichungstag der Patentschrift :
04.07.84

(21) Anmeldenummer : 81107949.0

(22) Anmeldetag : 06.10.81

(51) Int. Cl.³ : **F 16 N 15/00**, F 16 N 17/02,
B 21 C 23/32

(54) **Vorrichtung zum Schmieren von Werkzeugen an direkt- oder indirekt-arbeitenden Metallstrang- und/oder Rohrpressen.**

(30) Priorität : 30.10.80 DE 3040886

(43) Veröffentlichungstag der Anmeldung :
12.05.82 Patentblatt 82/19

(45) Bekanntmachung des Hinweises auf die Patenterteilung : 04.07.84 Patentblatt 84/27

(84) Benannte Vertragsstaaten :
CH DE FR GB IT LI

(56) Entgegenhaltungen :
DE-B- 1 137 707
GB-A-   469 012
GB-A-   924 494
GB-A-   964 619
GB-A- 2 033 810

(73) Patentinhaber : **SMS HASENCLEVER Maschinenfabrik GmbH**
**Witzelstrasse 55**
**D-4000 Düsseldorf 1 (DE)**

(72) Erfinder : **Steinmetz, Alfred**
**Wieselweg 5**
**D-4151 Schiefbahn (DE)**
Erfinder : **Exner, Klaus** .
**Rostocker Strasse 63**
**D-4000 Düsseldorf (DE)**
Erfinder : **Welters, Dieter**
**Wildenbruchstrasse 38a**
**D-4000 Düsseldorf 11 (DE)**

(74) Vertreter : **Pollmeier, Felix et al**
**Patentanwälte Hemmerich-Müller-Grosse-Pollmeier**
**Berliner Allee 41**
**D-4000 Düsseldorf 1 (DE)**

**Beschreibung**

Die Erfindung betrifft eine Vorrichtung zum Schmieren von Werkzeugen an direkt- oder indirekt-arbeitenden Metallstrang- und/oder Rohrpressen.

Bisher ist es üblich, das Schmieren der Werkzeuge, beispielsweise von fest mit dem Preßstempel einer Metallstrangpresse verbundenen Preßscheibe, manuell vorzunehmen. Das Aufbringen von meist flüssigem Schmierstoff, z. B. Flüssiggraphit, erfolgt ungleichmäßig. Die Aufbringung einer vorbestimmten Menge ist nicht gewährleistet. Dies gilt insbesondere dann, wenn Dorne zu schmieren sind. Die diese Arbeit ausführende Person steht in der Regel an einer Seite der Presse und erreicht nur mit Schwierigkeiten die ihr abgewandte Seite des Dornes. Die Schmiermittelverteilung ist ungleichmäßig. Das Schmierwerkzeug besteht zumeist aus einem mit einem Lappen umwickelten Stock, der in das flüssige Schmiermittel getaucht und dann manuell auf das zu schmierende Pressenwerkzeug aufgebracht wird. Das dabei herumspritzende flüssige Schmiermittel führt zu starker Verschmutzung der Maschine und Umgebung. Darüber hinaus ist diese Arbeit personalaufwendig. Auch mit Sprühen von flüssigem Schmiermittel auf die Werkzeuge mit dem Nachteil der Verschmutzung und der personalaufwendigen manuellen Tätigkeit ist bisher gearbeitet worden.

Aus der GB-A-2 033 810 ist auch eine pneumatisch betriebene Schmiervorrichtung bekannt die das der Strangpresse zugeführte Material schmiert

Der Erfindung liegt die Aufgabe zugrunde, eine Schmierung der Werkzeuge von direkt- oder indirekt-arbeitenden Metallstrang- und/oder Rohrpressen zu erzielen, die diese Nachteile nicht aufweist, d. h. eine Gleichmäßigkeit der Schmiermittelauftragung ermöglicht, nicht personalaufwendig ist und eine Verschmutzung stark einschränkt oder gänzlich unterbindet.

Erfindungsgemäß wird dies bei einer Vorrichtung zum Schmieren von Werkzeugen dadurch erreicht, daß ein in die Preßachse einfahr- oder einschwenkbarer Arm an seinem freien Ende drehbare und/oder verschiebbare Mittel zur Aufnahme eines in der Wärme schmelzenden Feststoff-Schmiermittels in Form einer Kerze trägt, wobei die Schmierstoffkerze mit ihrer Stirnseite gegen die Werkzeuge der Presse anstellbar oder verfahrbar ist.

Mit einer derartigen Vorrichtung ist man in der Lage, eine automatische Schmierung der Werkzeuge vorzunehmen, wobei die Zeit für die Schmierung in den Preßzyklus eingeordnet werden kann. Die Schmierung erfolgt gleichmäßig. Evtl. bei der Schmierung beim Schmelzen am warmen Werkzeug abtropfendes Schmiermittel kann aufgefangen und der Wiederverwendung zugeführt werden.

In Weiterbildung der Erfindung weist zur automatischen Schmierung einer am Preßstempel befestigten runden Preßscheibe bei einer Direkt-Metallstrangpresse oder eines am Laufholm angeordneten Verschlußstückes bei einer Indirekt-Metallstrangpresse der in die Preßachse einschwenkbare Arm an seinem freien Ende einen in der Preßachse axial verschiebbar angeordneten Getriebemotor auf, an dessen Wellenstumpf eine Aufnahmevorrichtung für eine Schmierstoffkerze vorgesehen ist zum rotierenden Andrücken gegen die Stirnseite der Preßscheibe bzw. des Verschlußstückes, wobei der Durchmesser der Schmierstoffkerze größer als derjenige der Preßscheibe bzw. des Verschlußstückes ist.

Mit Hilfe dieser Vorrichtung bei Verwendung von festem, in der Wärme schmelzenden Schmierstoff ist man in der Lage, ohne jede manuelle Hilfe eine automatisch arbeitende Schmierung der Stirnseite der Preßscheibe bzw. des Verschlußstückes zu erreichen. Da die Schmierstoffkerze einen größeren Durchmesser als die Preßscheibe bzw. das Verschlußstück aufweist, ist sichergestellt, daß bei rotierendem Andrücken der Schmierstoffkerze mittels des axial auf dem Schwenkarm verschiebbaren Getriebemotors auch der Rand der festen Preßscheibe bzw. des Verschlußstückes vom Schmierstoff erfaßt wird. Die axiale Anstellung des Getriebemotors kann dabei pneumatisch oder hydraulisch erfolgen.

Eine weitere Ausgestaltung der Erfindung besteht darin, daß zur automatischen Schmierung einer am Preßstempel befestigten, rechteckförmige Preßscheibe der in die Preßachse einschwenkbare Arm an seinem freien Ende eine in einer Aufnahmevorrichtung befindliche, in Preßachsrichtung durch pneumatische oder hydraulische Mittel in Richtung und zum Andrücken an die rechteckförmige Preßscheibe bewegbare rechteckförmige Schmierstoffkerze trägt.

Damit ist es möglich, auch bei Preßblöcken mit rechteckförmigem Querschnitt, die eine rechteckförmige Preßscheibe erfordern, eine automatisch ablaufende einwandfreie Schmierung der Preßscheibe zu erhalten, da die Schmierstoffkerze infolge der Wärme der Preßscheibe beim bloßen Andrücken ohnehin abschmilzt und damit an der Preßscheibe einen entsprechenden Schmierfilm hinterläßt.

Nach einem weiteren Merkmal der Erfindung zur automatischen Schmierung einer am Preßstempel befestigten rechteckförmigen Preßscheibe trägt der in die Preßachse einschwenkbare oder einfahrbare Arm an seinem freien Ende in der Preßachse einen axial verschiebbar angeordneten Getriebemotor, an dessen Wellenstumpf sich in einer Aufnahmevorrichtung eine runde Schmierstoffkerze befindet, und wobei der Getriebemotor selbst zusätzlich quer zur Preßachse verschiebbar ist.

Zu diesem Zweck weist vorteilhafterweise das freie Ende des Armes Führungen quer zur Preßachse auf, in denen durch hydraulische oder pneumatische Kraftmittel ein in den Führungen bewegbarer Schlitten geführt ist, an welchem der axial mit Kraftmitteln verschiebbare Getriebemotor mit Schmierkerze angeordnet ist.

Dadurch ist auch eine rechteckförmige Preßscheibe mittels einer runden Schmierkerze zu schmieren, die neben der axialen Anstellbarkeit auf die Preßscheibe infolge einer Bewegung quer zur Preßachse die gesamte Breite der rechteckförmigen Preßscheibe erfaßt und dabei vom Getriebemotor noch gedreht wird.

In erfindungsgemäßer Weiterbildung der Erfindung ist zur automatischen Schmierung eines aus dem Preßstempel einer direkt-arbeitenden Rohrpresse herausfahrbaren Preßdornes der in die Preßachse einfahrbare Arm an seinem freien Ende vorzugsweise U-förmig ausgebildet, und das U-förmige Teil weist mit seiner Öffnung auf die Preßachse, wobei mindestens zwei Schmierstoffkerzen innerhalb des U-förmigen Teiles angeordnet und mit ihrer Stirnseite auf die Dornmantelfläche anstellbar sind, und der Dorn zugleich axial und rotierend beweglich ist.

Damit ist es möglich, auch einen Dorn mittels des an seinem freien Ende U-förmig ausgebildeten Armes mit radial zur Preßachse anstellbaren Schmierstoffkerzen auf seiner ganzen Mantelfläche zu schmieren bei gleichzeitiger Rotation und Translation des Dornes.

Nach einem weiteren Merkmal der Erfindung weist zur automatischen Schmierung von Verschlußstück und Dorn einer Indirekt-Rohrpresse der in die Preßachse einfahrbare oder einschwenkbare Arm an seinem freien Ende einen um die Preßachse rotierenden Schmierstoffkerzenträger auf, bei dem mindestens zwei Schmierstoffkerzen radial und mindestens eine Schmierstoffkerze axial beweglich angeordnet sind.

Vorteilhafterweise ist dabei der um die Preßachse rotierende Schmierstoffkerzenträger ringförmig ausgebildet, wobei mindestens zwei Schmierstoffkerzen radial in Richtung Dorn anstellbar und mindestens eine Schmierstoffkerze exzentrisch zur Preßachse axial auf das Verschlußstück anstellbar sind, wobei die letztere Schmierstoffkerze mit ihrer Stirnseite über den stirnseitigen Rand des Verschlußstückes hinausragt.

Auf diese Weise wird mittels des rotierenden Schmierstoffkerzenträgers die Möglichkeit eröffnet, einen Dorn und ein Verschlußstück gleichzeitig oder direkt hintereinander automatisch zu schmieren.

Ausführungsbeispiele der Erfindung werden anhand von Zeichnungen näher erläutert. Es zeigen:

Figur 1 einen Querschnitt durch eine Metallstrangpresse mit Ansicht auf den Zylinderholm und den Laufholm sowie der in die Preßachse eingeschwenkten Werkzeug-Schmiervorrichtung,

Figur 2 den unteren Teil eines in die Preßachse einschwenkbaren Armes mit in Preßachse axialer Verschiebevorrichtung für einen Getriebemotor mit angeflanschter Schmierstoffkerze,

Figur 3 eine um 90° versetzte Ansicht der Fig. 2,

Figur 4 eine Ansicht auf den unteren Teil des in die Preßachse eingeschwenkten Armes mit axialer Verschiebevorrichtung einer rechteckförmigen Schmierstoffkerze zur Schmierung einer rechteckförmigen Preßscheibe,

Figur 5 eine Ansicht auf den unteren Teil des in die Preßachse eingeschwenkten Armes mit Vorrichtungen zur Quer- und Längsverschiebung eines eine Schmierkerze tragenden Getriebemotors,

Figur 6 eine um 90° versetzte Ansicht der Fig. 5,

Figur 7 eine Ansicht auf den unteren Teil des in die Preßachse eingeschwenkten Armes mit U-förmig ausgebildeten, mit seiner Öffnung auf die Preßachse weisenden Ende mit radial zur Preßachse anstellbaren Schmierkerzen zur Dornschmierung bei Direkt-Metallstrang-pressen,

Figur 8 eine Ansicht auf den unteren Teil des in die Preßachse eingeschwenkten Armes mit axial verschiebbarem Getriebemotor, der eine um die Preßachse rotierende Schmiervorrichtung antreibt, die axial und radial anstellbare Schmierkerzen trägt zur Schmierung von Verschlußstück und Dorn einer Indirekt-Strang- und Rohrpresse und

Figur 9 eine um 90° versetzte Ansicht der Fig. 8.

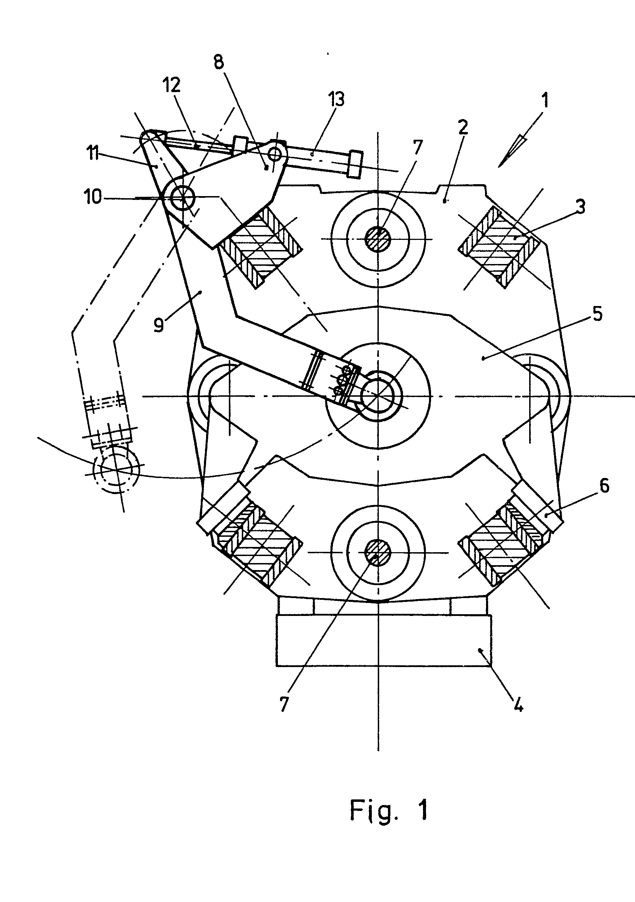

Eine Metallstrang- und Rohrpresse 1 (Fig. 1), bestehend aus Zylinderholm 2 und nicht dargestelltem Gegenhalter und diese verbindenden vorgespannten Zugelementen 3, ruht auf einem Fundament 4. Ein Laufholm 5 ist mit seinen Abstützungen 6 auf den Zugelementen 3 geführt. Verschiebestangen 7 gehören zu einem nicht dargestellten Blockaufnehmer.

An einem der oberen Zugelemente 3 ist eine Haltevorrichtung 8 befestigt. Ein in die Preßachse einschwenkbarer Arm 9 ist als zweiarmiger Hebel im Drehpunkt 10 der Haltevorrichtung 8 gelenkig gelagert. Sein oberer kurzer Hebel 11 ist gelenkig mit der Kolbenstange 12 eines hydraulischen oder pneumatischen Kraftzylinders 13 verbunden, der ebenfalls in der Haltevorrichtung 8 gelenkig gelagert ist. Dieser Kraftzylinder 13 bewirkt ein Schwenken des freien Endes des Armes 9 in die Preßachse. Der Arm 9 ist an seinem unteren Ende quergeteilt ausgeführt zur lösbaren Befestigung verschiedener Vorrichtungen zum Schmieren von nachstehend angeführten Werkzeugen der Metallstrang- und Rohrpresse 1. Dabei haben die Vorrichtungen, die in den verschiedenen Vorrichtungen angeordnet sind und in ihrer Funktion gleich sind, die gleichen Ziffern.

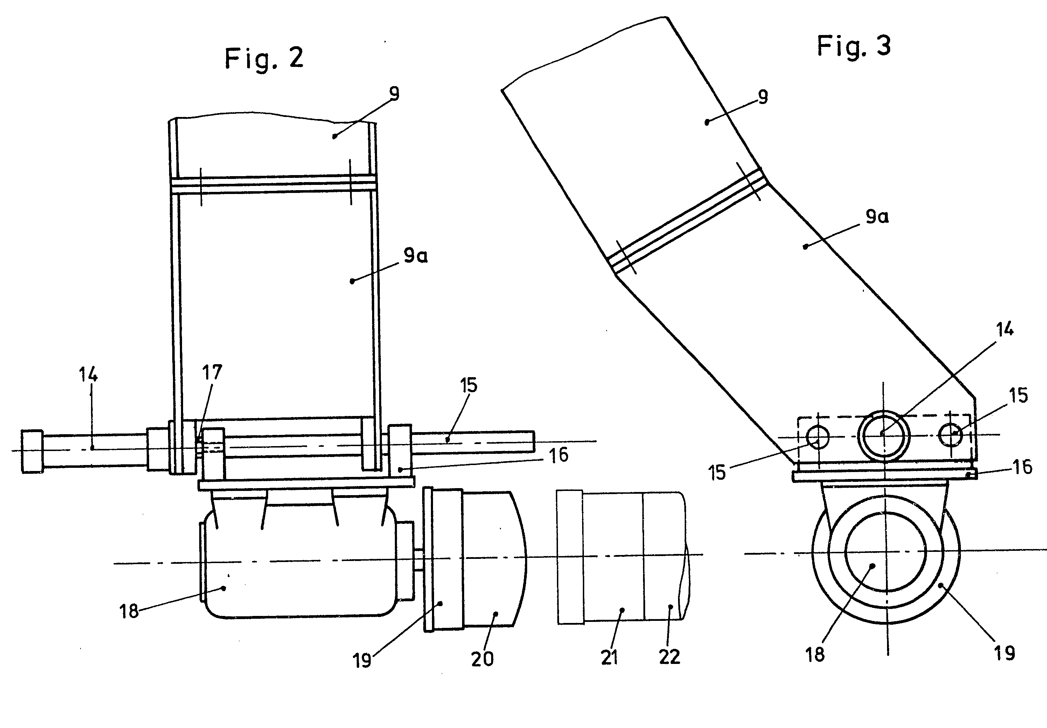

Im unteren Teil 9a, der mit dem Arm 9 lösbar verbunden ist (Fig. 2 und Fig. 3), ist parallel zur Preßachse als Kraftzylinder ein Hydraulik- oder Pneumatikzylinder 14 angeordnet. Ferner sind beiderseits der Achse des Kraftzylinders 14 Führungsstangen 15 vorgesehen. An diesen Führungsstangen 15 gleitet eine Aufhängevorrichtung 16. Letztere ist mit der Kolbenstange 17 des Kraftzylinders 14 verbunden.

An der unteren Seite der Aufhängevorrichtung 16 ist ein Getriebemotor 18 befestigt, der in seinem Wellenstumpf eine Aufnahmevorrichtung 19 für eine Schmierstoffkerze 20 aufweist. Zum Schmiervorgang wird die durch den Getriebemotor 18 rotierende Schmierstoffkerze 20 mittels des Kraftzylinders 14 gegen eine Preßscheibe 21, die an einem Preßstempel 22 der Metallstrangpresse 1 befestigt ist, gedrückt.

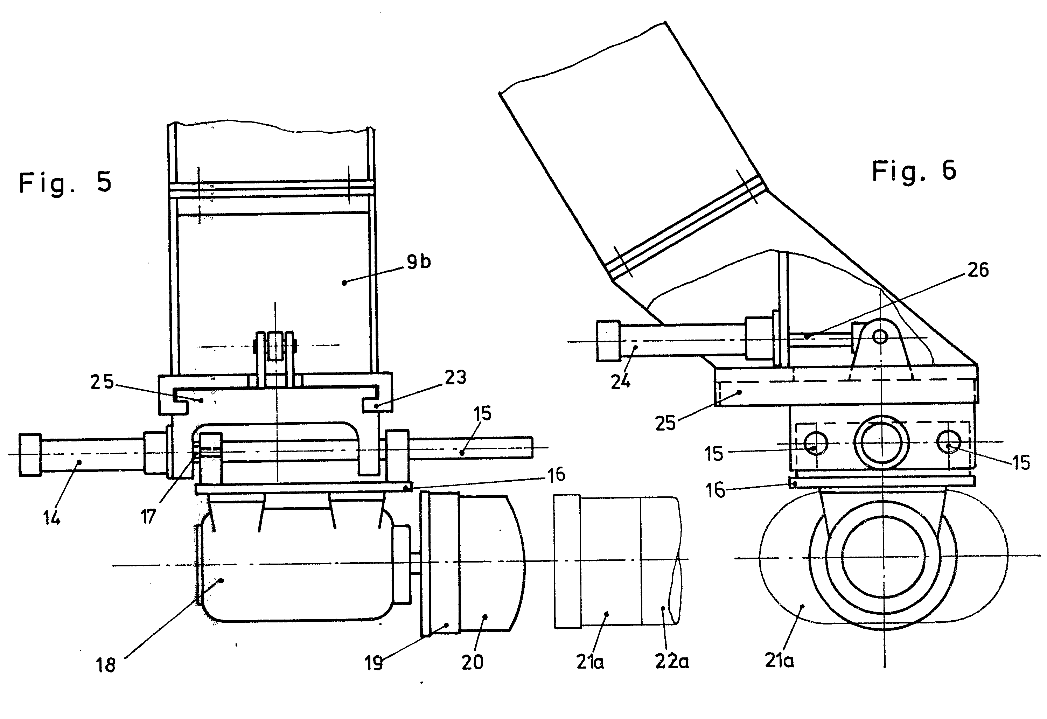

In Fig. 4 bewegt der Kraftzylinder 14 über Kolbenstange 17 die Aufhängevorrichtung 16, an der direkt eine rechteckförmige Aufnahmevorrichtung 19a für eine rechteckförmige Schmierstoffkerze 20a angeordnet ist, axial gegen eine rechteckförmige Preßscheibe 21a eines entsprechenden Preßstempels 22a.

Zur Schmierung einer rechteckförmigen Preßscheibe 21a mittels einer runden Schmierstoffkerze 20 (Fig. 5 und Fig. 6) sind an einem unteren Teil 9b des Armes 9 Führungen 23 quer zur Preßachse vorgesehen. Ferner ist am unteren Teil des Armes 9 ein hydraulischer oder pneumatischer Kraftzylinder 24 quer zur Preßachse angeordnet. In den Führungen 23 ist ein Schlitten 25 bewegbar, der mit der Kolbenstange 26 des Kraftzylinders 24 gelenkig verbunden ist.

An dem Schlitten 25 ist ein hydraulischer oder pneumatischer Kraftzylinder 14 parallel zur Preßachse vorgesehen. Ferner sind zwei Führungsstangen 15 beiderseits und parallel zum Kraftzylinder 14 an dem Schlitten 25 befestigt. An diesen Führungsstangen 15 gleitet eine Aufhängevorrichtung 16. Letztere ist mit der Kolbenstange 17 des Kraftzylinders 14 verbunden. An der unteren Seite der Aufhängevorrichtung 16 ist ein Getriebemotor 18 befestigt, der an seinem Wellenstumpf eine Aufnahmevorrichtung 19 für eine runde Schmierstoffkerze 20 aufweist.

Zum Schmiervorgang wird die durch den Getriebemotor 18 rotierende Schmierstoffkerze 20 mittels des Kraftzylinders 14 gegen eine rechteckförmige Preßscheibe 21a, die an einem Preßstempel 22a der Metallstrangpresse 1 befestigt ist, gedrückt. Gleichzeitig wird der quer zur Preßachse befindliche Kraftzylinder 24 beaufschlagt, so daß seine Kolbenstange 26 den Schlitten 25 und damit die Schmierstoffkerze 20 an der rechteckförmigen Preßscheibe 21a quer zur Preßachse hin- und herbewegt. Auf diese Weise wird auch die rechteckförmige Preßscheibe 21a von einer runden Schmierstoffkerze 20 über ihre gesamte Länge geschmiert.

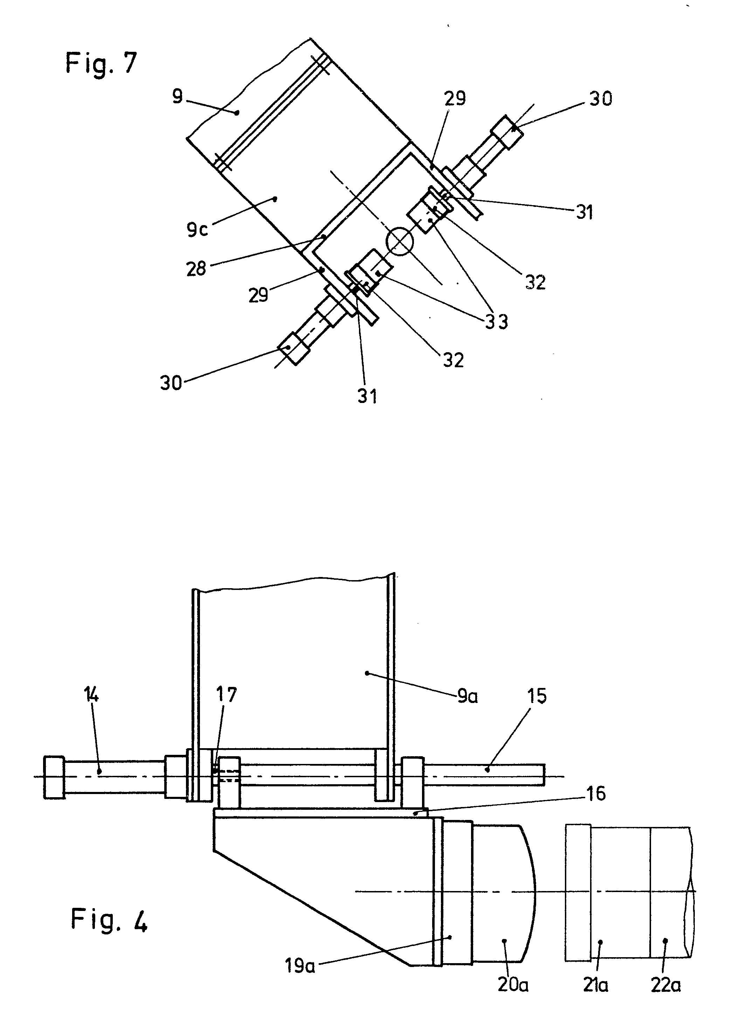

Zur automatischen Schmierung eines aus dem Preßstempel einer direkt-arbeitenden Rohrpresse herausfahrbaren Preßdornes 27 (Fig. 7) ist der untere Teil 9c des in die Preßachse einschwenkbaren Armes 9 an seinem freien Ende U-förmig ausgebildet, wobei der U-förmige Teil 28 mit seiner Öffnung auf die Preßachse weist. An seinen beiden Schenkeln 29 des U-förmigen Teiles 28 ist je ein hydraulischer oder pneumatischer Kraftzylinder 30 vorgesehen. Deren Kolbenstangen 31 sind mit je einer Aufnahmevorrichtung 32 verbunden, die jede eine Schmierstoffkerze 33 aufnehmen. Die beiden Schmierstoffkerzen 33 sind bei Beaufschlagung der Kraftzylinder 30 auf die Mantelfläche des Preßdornes 27 anstellbar. Da der Preßdorn 27 sich axial und rotierend in der Preßachse bewegt, wird seine Mantelfläche entsprechend geschmiert.

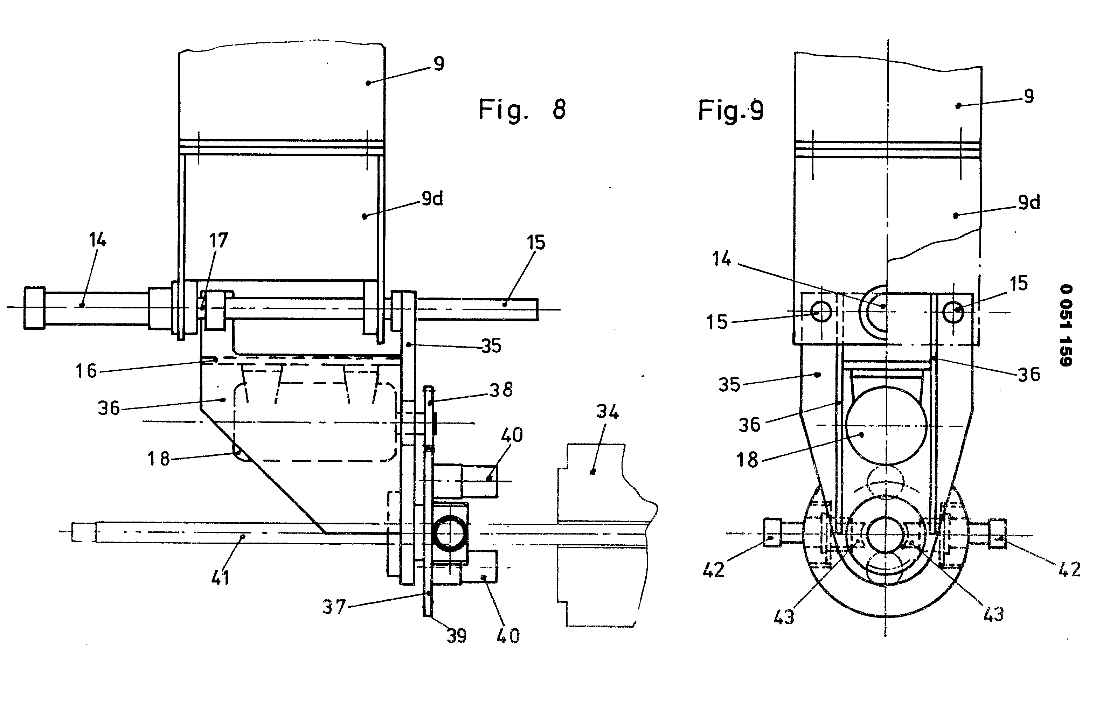

Zur automatischen Schmierung von Verschlußstück und Dorn einer Indirekt-Rohrpresse ist am unteren Teil 9d (Fig. 8 und Fig. 9) ein hydraulischer oder pneumatischer Kraftzylinder 14 parallel zur Preßachse befestigt. Ferner sind beiderseits des Kraftzylinders je eine Führungsstange 15 im Teil 9d angeordnet. Auf diesen Führungsstangen 15 gleitet eine Aufhängevorrichtung 16, die mit dem Kolben 17 des Kraftzylinders 14 verbunden ist. An ihrer Unterseite ist ein Getriebemotor 18 befestigt.

Die Aufhängevorrichtung 16 weist an ihrer einem Verschlußstück 34 der Presse zugewandten Stirnseite eine Tragplatte 35 auf, die durch rechts und links des Getriebemotors 18 angebrachte Rippen 36 versteift ist. An dieser Tragplatte 35 ist ein ringförmiger, um die Preßachse rotierender Schmierstoffkerzenträger 37 angeordnet. Der Antrieb dieses ringförmigen Schmierstoffkerzenträgers 37 erfolgt über ein auf der Welle des Getriebemotors 16 befindliches Zahnrad 38, das in eine Verzahnung 39 des Schmierstoffkerzenträgers 37 eingreift. An der dem Verschlußstück 34 zugewandten Seite sind auf der Stirnseite des Schmierstoffkerzenträgers 37 zur Mittelachse versetzt zueinander angeordnete, in Preßachsrichtung axial auf das Verschlußstück 34 anstellbare Schmierstoffkerzen 40 vorgesehen.

Zur Schmierung eines Dornes 41, der nach Einschwenken des Armes 9 in die Preßachse axial aus dem Verschlußstück 34 herausfahrbar ist, sind auf dem ringförmigen Schmierstoffkerzenträger 37 zwei gegenüberliegende, radial auf die Mantelfläche des Dornes 41 mittels Anstellmitteln 42 anstellbare Schmierstoffkerzen 43 vorgesehen, die den vorfahrenden Dorn durch die rotierende Bewegung schmieren.

**Ansprüche**

1. Vorrichtung zum Schmieren von Werkzeugen an direkt-oder indirekt-arbeitenden Metallstrang- und/oder Rohrpressen, dadurch gekennzeichnet, daß ein in die Preßachse einfahr- oder einschwenkbarer Arm (9) an seinem freien Ende drehbare und/oder verschiebbare Mittel zur Aufnahme eines in der Wärme schmelzenden Feststoff-Schmiermittels in Form einer Kerze trägt, wobei die Schmierstoffkerze mit ihrer Stirnseite gegen die Werkzeuge der Presse (1) anstellbar oder verfahrbar ist.

2. Vorrichtung nach Anspruch 1, dadurch gekennzeichnet, daß zur automatischen Schmierung einer am preßstempel (22) befestigten runden Preßscheibe (21) bei einer Direkt-Metallstrangpresse oder eines am Laufholm angeordneten Verschlußstückes (34) bei einer Indirekt-Metallstrangpresse der in die Preßachse einschwenkbare Arm (9) an seinem freien Ende einen in der Preßachse axial verschiebbar angeordneten Getriebemotor (18) aufweist, an dessen Wellenstumpf eine Aufnahmevorrichtung (19) für eine Schmierstoffkerze (20) vorgesehen ist zum rotierenden Andrücken gegen die Stirnseite der Preßscheibe (21) bzw. des Verschlußstückes (34), wobei der Durchmesser der Schmierstoffkerze (20) größer als derjenige der Preßscheibe (21) bzw. des Verschlußstückes (34) ist.

3. Vorrichtung nach Anspruch 1, dadurch gekennzeichnet, daß zur automatischen Schmierung einer am Preßstempel befestigten rechteckförmigen Preßscheibe (21a) der in die Preßachse einschwenkbare oder einfahrbare Arm (9) an seinem freien Ende eine in einer Aufnahmevorrichtung (19a) befindliche, in Preßachsrichtung durch pneumatische oder hydraulische Mittel (14) in Richtung un zum Andrücken an die rechteckförmige Preßscheibe (21a) bewegbare rechteckförmige Schmierstoffkerze (20a) trägt.

4. Vorrichtung zur automatischen Schmierung nach den Ansprüchen 2 und 3, dadurch gekennzeichnet, daß zur Schmierung einer am Preßstempel befestigten rechteckförmigen Preßscheibe (21a) der in die Pressachse einschwenkbare oder einfahrbare Arm (9) an seinem freien Ende in der Preßachse einen axial verschiebbar angeordneten Getriebemotor (18) trägt, an dessen Wellenstumpf sich in einer Aufnahmevorrichtung (19) eine runde Schmierstoffkerze (20) befindet, und wobei der Getriebemotor (18) selbst zusätzlich quer zur Preßachse verschiebbar ist.

5. Vorrichtung nach Anspruch 4, dadurch gekennzeichnet, daß das freie Ende des Armes (9) Führungen (23) quer zur Preßachse aufweist, in denen durch hydraulische oder pneumatische Kraftmittel (24) ein in den Führungen (23) bewegbarer Schlitten (25) geführt ist, an welchem der axial mit Kraftmitteln verschiebbare Getriebemotor (18) mit Schmierkerze (20) angeordnet ist.

6. Vorrichtung nach Anspruch 1, dadurch gekennzeichnet, daß zur automatischen Schmierung eines aus dem Preßstempel einer direktarbeitenden Rohrpresse herausfahrbaren Preßdornes (27) der in die Preßachse einfahrbare Arm (9) an seinem freien, auf die Preßachse weisenden Ende vorzugsweise U-förmig ausgebildet ist und das U-förmige Teil (28) mit seiner Öffnung auf die Preßachse weist, wobei mindestens zwei Schmierstoffkerzen (33) innerhalb des U-förmigen Teiles (28) angeordnet und mit ihrer Stirnseite auf die Dornmantelfläche anstellbar sind, und der Dorn (27) zugleich axial und rotierend beweglich ist.

7. Vorrichtung nach Anspruch 1, dadurch gekennzeichnet, daß zur automatischen Schmierung von Verschlußstück (34) und Dorn (41) einer Indirekt-Rohrpresse der in die Preßachse einfahrbare oder einschwenkbare Arm (9) an seinem freien Ende einen um die Preßachse rotierenden Schmierstoffkerzenträger (37) aufweist, bei dem mindestens zwei Schmierstoffkerzen (43) radial und mindestens eine Schmierstoffkerze (40) axial beweglich angeordnet sind.

8. Vorrichtung nach Anspruch 7, dadurch gekennzeichnet, daß der um die Preßachse rotierende Schmierstoffkerzenträger (37) ringförmig ausgebildet ist, wobei mindestens zwei Schmierstoffkerzen (43) radial in Richtung Dorn (41) anstellbar und mindestens eine Schmierstoffkerze (40) exzentrisch zur Preßachse axial auf das Verschlußstück (34) anstellbar sind, wobei die letztere Schmierstoffkerze (40) mit ihrer Stirnseite über den stirnseitigen Rand der Verschlußstückes (34) hinausragt.

**Claims**

1. A lubricating device for tools of directly or indirectly operating presses for metal rods and/or pipes, characterized in that an arm (9) which can be moved or swung into the press axis carries at its free end rotatable and/or slidably displaceable means for receiving a solid lubricant which melts in heat in the form of a candle, and the end face of the lubricant candle can be placed or moved against the tools of the press (1).

2. A device according to Claim 1, characterized in that, for the automatic lubrication of a round press plate (21) secured to the press ram (22) in a direct extrusion press for metal rods or a closure member (34) disposed on a travelling crosshead in an indirect extrusion press for metal rods, the free end of the arm (9) which can be swung into the press axis is provided with a drive motor (18) which is arranged so as to be axially displaceable in the press axis and on the shaft end of which is provided a receiving device (19) for a lubricant candle (20) for pressing in a rotating manner against the end face of the press plate (21) or the closure member (34) respectively, the diameter of the lubricant candle (20) being greater than that of the press plate (21) or the closure member (34).

3. A device according to Claim 1, characterized in that, for the automatic lubrication of a rectangular press plate (21a) secured to the press ram, the free end of the arm (9) which can be swung of moved into the press axis supports a rectangular lubricant candle (20a) which is disposed in a receiving device (19a) and which can be moved by pneumatic or hydraulic means (14) in the direction of and to press against the rectangular press plate (21a).

4. A device for automatic lubrication according to Claims 2 and 3, characterized in that, for the lubrication of a rectangular press plate (21a) secured to the press ram, the free end of the arm (9) which can be swung or moved into the press axis supports, in the press axis, a drive motor (18) which is arranged so as to be axially displaceable and on the shaft end of which is disposed a round lubricant candle (20) in a receiving device (19), the drive motor (18) itself also being movable transversely to the press axis.

5. A device according to Claim 4, characterized in that the free end of the arm (9) comprises guides (23) which are transverse to the press axis and in which a slide (25), which is movable in the said guides (23) and on which the drive motor (18), axially displaceable by power means, is disposed together with the lubricant candle (20), is guided by hydraulic or pneumatic power means (24).

6. A device according to Claim 1, characterized in that, for the automatic lubrication of a press mandrel (27) which can be extended out of the press ram of a directly operating pipe press, the arm (9) which can be moved into the press axis is preferably U-shaped at its free end towards the press axis and the opening of the U-shaped part (28) faces towards the press axis, at least two lubricant candles (33) being disposed within the U-shaped part (28) and being capable of being set with their end faces onto the mandrel surface, and the mandrel (27) is at the same time axially and rotatably movable.

7. A device according to Claim 1, characterized in that, for the automatic lubrication of the closure member (34) and the mandrel (41) of an indirect pipe press, the free end of the arm (9) which can be moved or swung into the press axis comprises a lubricant candle carrier (37) rotating about the press axis, in which at least two lubricant candles (43) are arranged so as to be radially movable and at least one lubricant candle (40) is arranged so as to be axially movable.

8. A device according to Claim 7, characterized in that the lubricant candle carrier (37) rotating about the press axis is annular, at least two lubricant candles (43) being capable of being set radially towards the mandrel (41) and at least one lubricant candle (40) being capable of being set axially to the closure member (34) eccentrically to the press axis, the end face of the latter lubricant candle (40) projecting beyond the front edge of the closure member (34).

**Revendications**

1. Dispositif de lubrification des outils de presse d'extrusion directe ou indirecte de barres ou de tubes métalliques, caractérisé en ce qu'un bras (9), qui peut se déplacer ou pivoter pour venir dans l'axe de la presse, porte, à son extrémité libre, un moyen tournant et/ou coulissant, de recevoir un lubrifiant solide, fondant à la chaleur, sous forme d'un bâton, ce bâton de lubrifiant pouvant être amené ou déplacé pour venir avec sa face frontale contre les outils de la presse (1).

2. Dispositif selon la revendication 1, caractérisé en ce que, pour la lubrification automatique d'un embout (21) rond fixé au poinçon (22) de la presse, dans le cas d'une presse d'extrusion directe du métal, ou pour la lubrification automatique d'un obturateur (34), disposé sur le chariot, dans le cas d'une presse d'extrusion indirecte du métal, le bras (9), qui peut pivoter pour venir dans l'axe de la presse, présente, à son extrémité libre, un moteur d'entraînement (18) disposé avec possibilité de coulisser axialement selon l'axe de la presse, moteur au bout d'arbre duquel est prévu un dispositif de réception (19) d'un bâton de lubrifiant (20), pour pouvoir appuyer ce bâton en le faisant tourner, contre la face frontale de l'embout de la presse (21) ou de l'obturateur (34), étant précisé que le diamètre du bâton de lubrifiant (20) est supérieur à celui de l'embout (21) de la presse ou de l'obturateur (34).

3. Dispositif selon la revendication 1, caractérisé en ce que, pour la lubrification automatique d'un embout de presse (21a) de forme rectangulaire et fixé au poinçon de presse, le bras (9), qui peut pivoter ou se déplacer pour venir dans l'axe de la presse, porte, à son extrémité libre, un bâton de lubrifiant (20a), de forme rectangulaire, logé dans un dispositif de réception (19a) et qu'un moyen pneumatique ou hydraulique (14) peut déplacer selon la direction de l'axe de la presse en direction de l'embout (21a) de forme rectangulaire et pour s'appuyer contre cet embout.

4. Dispositif de lubrification automatique selon les revendications 2 et 3, caractérisé en ce que pour la lubrification d'un embout de presse (21a), de forme rectangulaire, fixé au poinçon de presse, le bras (9), qui peut pivoter ou se déplacer pour venir dans l'axe de la presse, porte, à son extrémité libre dans l'axe de la presse, un moteur d'entraînement (18), disposé de façon à pouvoir coulisser axialement et sur le bout d'arbre duquel se trouve, dans un dispositif de réception (19), un bâton rond de lubrifiant (20), étant précisé que le moteur d'entraînement (18) peut lui-même, de plus, coulisser transversalement par rapport à l'axe de la presse.

5. Dispositif selon la revendication 4, caractérisé en ce que l'extrémité libre du bras (9) présente, transversalement à l'axe de la presse, des guidages (23), dans lesquels un vérin hydraulique ou pneumatique (24) déplace un coulisseau (25), mobile dans les guidages (23) et sur lequel est disposé le moteur d'entraînement (18) portant le bâton le lubrifiant (20) et que les vérins peuvent faire coulisser axialement.

6. Dispositif selon la revendication 1, caractérisé en ce que, pour la lubrification automatique d'un mandrin (27) de presse qui peut sortir hors du poinçon d'une presse pour tubes, travaillant directement, le bras (9), qui peut se déplacer pour venir dans l'axe de la presse, a, à son extrémité libre dirigée vers l'axe de la presse, de préférence la forme d'un U, la pièce en forme de U (28) ayant son ouverture dirigée vers l'axe de la presse, étant précisé qu'au moins deux bâtons de lubrifiant (33) sont disposés à l'intérieur de la pièce en forme de U (28) et peuvent être amenés avec leur face frontale contre la surface périphérique du mandrin, ce mandrin étant simultanément mobile par déplacement axial et par rotation.

7. Dispositif selon la revendication 1, caractérisé en ce que pour la lubrification automatique de l'obturateur (34) et du mandrin (41) d'une presse à tubes travaillant indirectement, le bras (9), qui peut se déplacer ou pivoter pour venir dans l'axe de la presse, présente, à son extrémité libre, un support (37) de bâton de lubrifiant, sur lequel son disposés au moins deux bâtons (43) de lubrifiants mobiles radialement et au moins un bâton (40) mobile axialement.

8. Dispositif selon la revendication 7, caractérisé en ce que le support (37) de bâton de lubrifiant, qui tourne autour de l'axe de la presse, a la forme d'une couronne, étant précisé qu'au moins deux bâtons (43) de lubrifiant sont réglables radialement en direction du mandrin (41) pour venir contre l'obturateur (34) et qu'au moins un bâton (40) de lubrifiant, monté excentriquement par rapport à l'axe de la presse, est réglable axialement pour venir contre l'obturateur (34), le bâton de lubrifiant (40) nommé en dernier lieu débordant par sa face frontale, au-delà de la bordure frontale de l'obturateur (34).

Fig. 1

Fig. 2

Fig. 3

0 051 159

Fig. 5

Fig. 6

9b

25

23

14

17

15

16

18

19

20

21a

22a

24

26

25

15

15

16

21a

0 051 159

Fig. 7

9
9c
28
29
29
30
31
32
33
32
31
30

Fig. 4

14
17
9a
15
16
19a
20a
21a
22a

4

Fig. 9

Fig. 8